# EUROPÄISCHE PATENTSCHRIFT

(11) **EP 0 698 193 B1**
(45) Veröffentlichungstag und Bekanntmachung des Hinweises auf die Patenterteilung: **12.08.1998**
(21) Anmeldenummer: 95910547.9
(22) Anmeldetag: 03.03.1995
(51) Int. Cl.: F16L 37/38, F16L 37/28

(54) **HYDRAULISCHES ABSPERRVENTIL**
HYDRAULIC SHUT-OFF VALVE
SOUPAPE D'ARRET HYDRAULIQUE

(30) Priorität: 10.03.1994 DE 4407976
(43) Veröffentlichungstag der Anmeldung: 28.02.1996
(73) Patentinhaber: MERCK PATENT GmbH, 64293 Darmstadt (DE)
(72) Erfinder: SZETELI, Andreas, D-70794 Filderstadt (DE); BÜTTNER, Werner, D-64291 Darmstadt (DE); BENZINGER, Martin, D-64720 Michelstadt (DE)
(86) Internationale Anmeldenummer: EP9500778
(87) Internationale Veröffentlichungsnummer: WO9524584

(56) Entgegenhaltungen:
- DE-B- 1 258 684
- GB-A- 1 052 739
- PATENT ABSTRACTS OF JAPAN vol. 18 no. 183 (M-1584) ,29.März 1994 & JP,A,05 340401 (NHK SPRING CO LTD) 21.Dezember 1993,
- PATENT ABSTRACTS OF JAPAN vol. 13 no. 311 (M-851) ,17.Juli 1989 & JP,A,01 101219 (NISSAN MOTOR CO LTD) 19.April 1989,

## Beschreibung

Die Erfindung betrifft ein hydraulisches Absperrventil mit einem Ventileinsatz, der eine Ventilfeder, ein Halteelement und einen Ventilsitz aufweist und die Ventilfeder, das Halteelement und der Ventilsitz als zweiteiliges oder einteiliges Bauteil ausgebildet sind, wobei die Ventilfeder als ein einen Hohlraum aufweisender Körper ausgebildet ist.

Derartige hydraulische Absperrventile sind in Schlauchkupplungen, die beidseitig absperrend sind und als Schnellverschluß-Kupplung wirken, bekannt. Bei diesen bekannten Kupplungen wird die Verbindung dadurch hergestellt, daß die Kupplungshülse auf den Kupplungsnippel aufgeschoben wird und dabei die Kupplungshülse mit dem Kupplungsnippel zum Beispiel über eine Kugelrastung verrastet. Beim Aufschieben der Hülse auf den Nippel werden die beiden Ventileinsätze von ihren Dichtungsflächen abgehoben und stellen die Verbindung zwischen den beiden Schlauchenden her. Die Ventileinsätze dieser bekannten Schlauchkupplungen bestehen aus mehreren Einzelteilen, die in der Regel ineinandergesteckt sind. Dabei dient das Halteelement als Befestigungselement für den kompletten Ventileinsatz im Kupplungsnippel bzw. in der Kupplungshülse.

Der Ventilsitz ist als weiteres separates Bauteil ausgebildet und dient gleichzeitig als Träger für die Ventilfeder und das Halteelement. Bei einem anderen bekannten Ausführungsbeispiel ist die Ventilfeder als Wellschlauch ausgebildet und steckt mit seinen Enden im hülsenförmig ausgebildeten Halte element bzw. hülsenförmig ausgebildeten Ventilsitz. Hierbei hat sich herausgestellt, daß durch die Wandungsvertiefungen des Wellschlauches, dessen Enden im hülsenförmigen Halteelement und im hülsenförmigen Ventilsitz stecken, Toträume und dadurch Schmutzspalte entstehen, die sich evtl. nachteilig auf das in den Schlauchleitungen zu führende Medium auswirken. Ferner dürfen bei der Verwendung von Reinstchemikalien als zu transportierendes Mittel keine Metallteile mit den Chemikalien in Berührung kommen, da die Chemikalien sonst durch Metallionen verunreinigt werden. Dies würde bei der Verwendung derartiger verunreinigter Chemikalien zur Herstellung elektronischer Bauteile Probleme aufwerfen, da die Metallionen an die elektronischen Bauteile abgegeben werden und dadurch diese Bauteile verunreinigen.

Mit der DE 30 50 957 C2 und der DE 36 18 233 C2 sind Absperrventile bekannt geworden, bei denen die Ventilfedern des Ventileinsatzes nach Art eines Faltenbalgs ausgebildet sind. Dabei hat sich herausgestellt, daß der Balg allmählich ermüdet und daher nur bedingt als Feder geeignet ist, da die Rückstellkraft allmählich nachläßt. Außerdem weist der Balg eine nur geringe Federkonstante auf.

Ausgehend von der DE 30 50 957 C2 liegt der Erfindung daher die Aufgabe zugrunde, ein hydraulisches Absperrventil der eingangs genannten Art derart weiterzubilden, daß der Ventileinsatz weniger Probleme, insbesondere auf dem Gebiet der Reinstchemikalien aufwirft.

Diese Aufgabe wird erfindungsgemäß dadurch gelöst, daß der Hohlraum mittels eines Schraubstopfens oder mittels eines auf- oder einschweißbaren Deckels gasdicht verschließbar ist.

Der erfindungsgemäße Ventileinsatz hat den Vorteil, daß er eine höhere Federkonstante aufweist und mit geringeren Toleranzen herstellbar ist. Ferner treten keine Toträume auf.

Durch den gasdichten Verschluß des Hohlraums wird der Vorteil erzielt, daß beim Komprimieren der Feder das eingeschlossene Gasvolumen im Hohlraum ebenfalls komprimiert wird und eine Rückstellkraft in Richtung der Federkraft erzeugt. Diese vom eingeschlossenen Gasvolumen herrührende Rückstellkraft wirkt einer Erlahmung der Feder entgegen, so daß die Federkonstante des erfindungsgemäßen Ventileinsatzes bzw. dessen Ventilfeder, über einen langen Zeitraum konstant ist. Außerdem bewirkt das im Hohlraum eingeschlossene Gasvolumen eine Erhöhung der Federkonstante, so daß als Federmaterial auch Materialien verwendet werden können, die einen geringen Elastizitätsmodul aufweisen.

Erfindungsgemäß ist der Ventileinsatz in einer Kupplungshülse und einem Kupplungsnippel einer Schlauchkupplung vorgesehen. Auch hier ist der Einbau des Ventileinsatzes in die Hülse und dem Nippel wesentlich vereinfacht.

Zur Unterstützung der Federkraft des Ventileinsatzes und des komprimierten Gasvolumens kann im Hohlraum des Ventileinsatzes zusätzlich ein weiteres Element aus geeignetem Werkstoff, vorzugsweise jedoch aus Kunststoff eingesetzt werden. Hat die im Hohlraum des Ventileinsatzes eingebaute Unterstützungsfeder eine Spiralform, so muß sie entgegen der Einschraubrichtung des Ventileinsatzes gewendelt sein. Dadurch wird ein Lösen des Ventilsitzes im Ventilgehäuse, ausgelöst durch die Betätigung der Kupplung, verhindert.

Bei üblichen Kupplungskonstruktionen wird in der Regel davon ausgegangen, daß die Federcharakteristika der Federelemente in beiden Kupplungsteilen, nämlich der Kupplungshülse und dem Kupplungsnippel, annähernd gleich sind und sich auch während der Nutzungsdauer nicht oder zumindest in gleicher Weise ändern. Dies ist die Voraussetzung, um beim Zusammenbringen beider Kupplungsteile deren Ventile optimal öffnen zu können. Sind die Federcharakteristika unterschiedlich, zum Beispiel durch vorzeitiges Ermüden eines der beiden Federelemente, besteht die Gefahr, daß ein Ventil nur unvollständig oder überhaupt nicht geöffnet wird. Dadurch wird die Strömungsgeschwindigkeit im Kupplungssystem mehr oder minder stark gedrosselt beziehungsweise der Durchgang wird vollständig unterbrochen.

Bei der vorliegenden Erfindung können derartige Störungsmöglichkeiten durch zusätzlichen Einbau eines Distanzstiftes im Ventilsitz ausgeschlossen werden. Der Distanzstift kann sowohl lose in das Gehäuse eingesetzt werden, als auch fest mit dem Außengehäuse verbunden sein.

Gemäß einer bevorzugten Ausführungsform wird die Ventilfeder von einem Balg oder einem Wellschlauch gebildet. Dabei weist der Balg eine ondulierte Wandung auf. Bei einem anderen Ausführungsbeispiel weist der Balg eine zick-zack-förmige Wandung auf. Durch die Ausgestaltung der wandung als ondulierte Wandung oder in Zick-Zack-Form kann die Federkonstante gezielt beeinflußt werden, wobei ondulierte Wandungen für eine hohe Federkonstante und zick-zack-förmige Wandungen für geringere Federkonstanten eingesetzt werden. Durch eine flache Ondulierung bzw. Zackung kann die Federkonstante weiter erhöht werden.

Bei einem anderen Ausführungsbeispiel wird die Ventilfeder von einer gewendelten Feder gebildet.

Erfindungsgemäß ist der Ventileinsatz spanend oder durch Spritzgießen hergestellt. Dabei weist der Ventilsitz an seiner, der Ventilfeder abgewandten Seite eine Betätigungsnase für den anderen Ventileinsatz auf. Diese Betätigungsnase liegt beim Kuppeln des Kupplungsnippels mit der Kupplungshülse am Ventilsitz des anderen Ventileinsatzes an und hebt diesen beim weiteren Einschieben des Kupplungsnippels in die Kupplungshülse von der Dichtungsfläche ab. Gleichzeitig hebt jedoch auch der Ventilsitz mit der Betätigungsnase von der Dichtungsfläche ab, so daß die beiden Schlauchenden nunmehr in Verbindung miteinander stehen und das zu transportierende Medium die beiden Ventile ungehindert passieren können. Durch die Länge der Betätigungsnase kann der Öffnungsspalt gezielt eingestellt werden.

Gemäß einem bevorzugten Ausführungsbeispiel besteht der Ventileinsatz aus Kunststoff, insbesondere einem Fluorkunststoff, wie PFA, PTFE, TFM, PEEK usw. Derartige Kunststoffe werden insbesondere dann verwendet, wenn Reinstchemikalien transportiert werden müssen. Weist die Ventilfeder einen gasdichten Hohlraum auf, dann können derartige Kunststoffe bedenkenlos eingesetzt werden, da über das eingeschlossene Gasvolumen die Federkonstante derartiger Kunststoffe soweit angehoben wird und außerdem aufgrund der Rückstellkraft durch das eingeschlossene Gasvolumen keine Ermüdungserscheinungen des Kunststoffs auftreten, daß die Eigenschaften mit denen von Metallfedern vergleichbar sind.

Bevorzugt wird der erfindungsgemäße Ventileinsatz eines hydraulischen Absperrventils in Schlauchkupplungen zur Verbindung von Schlauchleitungen verwendet, in denen Reinstchemikalien transportiert werden. Insbesondere bei diesem Verwendungszweck erweist sich der neue Ventileinsatz als besonders vorteilhaft, da seine Eigenschaften denen eines Ventileinsatzes mit einer Metallfeder entsprechen, jedoch die Gefahren, die bei der Verwendung von Metallbauteilen ausgehen, vermieden werden. Bei einem Defekt, zum Beispiel einem Bruch des erfindungsgemäßen Ventileinsatzes ist nicht mit einer Verunreinigung der Reinstchemikalie z.B. durch Metallionen zu rechnen, was bei Verwendung von Metallfedern, die in der Regel von einem Kunststoffschlauch, der an beiden Enden dicht verschweißt ist, der Fall wäre. Die erfindungsgemäße Schlauchkupplung ist daher bedenkenlos bei der Herstellung von elektronischen Bauteilen, z.B. Mikrochips oder dgl. einsetzbar.

Die Federkonstante, insbesondere die Federkennlinie kann außerdem gezielt dadurch beeinflußt werden, daß ein weiteres Federelement in den Hohlraum der Ventilfeder eingesetzt wird. Auf diese Weise kann die Federkennlinie z.B. linear, degressiv oder progressiv eingestellt werden, oder so verändert werden, daß sie einen Knick aufweist.

Weitere Vorteile, Merkmale und Einzelheiten ergeben sich aus der nachfolgenden Beschreibung, in der unter Bezugnahme auf die Zeichnung ein besonders bevorzugtes Ausführungsbeispiel im einzelnen dargestellt ist. Dabei zeigen:
- Figur 1: einen Seitenansicht einer Schlauchkupplung mit Kupplungshülse und Kupplungsnippel und angedeutet dargestelltem Ventileinsatz;
- Figur 2: eine erste Ausführungsform eines Ventileinsatzs im Längsschnitt in vergrößerter Wiedergabe; und
- Figur 3: eine zweite Ausführungsform eines Ventileinsatzs im Längsschnitt in vergrößerter Wiedergabe.

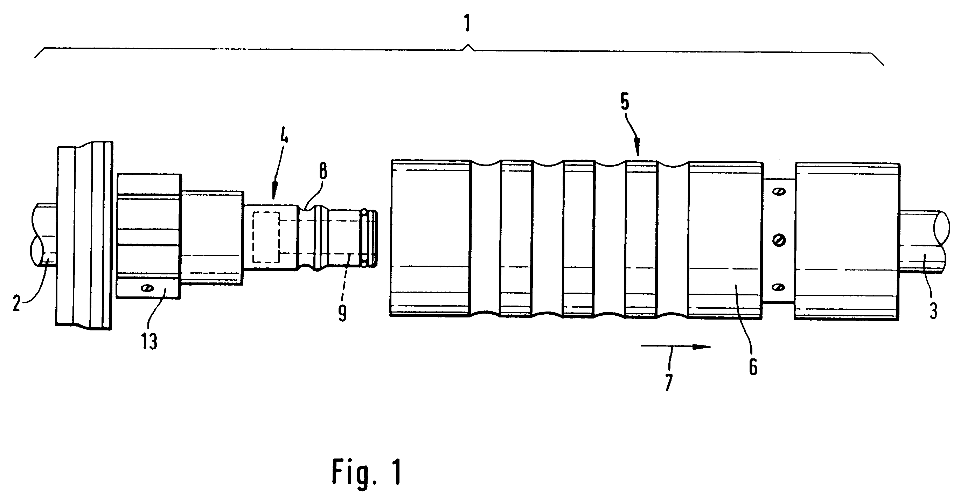

In Figur 1 ist eine Schlauchkupplung 1 dargestellt, mit der zwei Enden 2 und 3 zweier fluide Medien führender Schlauchleitungen miteinander verbindbar sind. Die Schlauchkupplung 1 besteht aus einem Kupplungsnippel 4 und einer Kupplungshülse 5, die eine verschieblich gelagerte Schiebehülse 6 aufweist. Vor dem Einschieben des Kupplungsnippels 4 in die Kupplungshülse 5 muß die Schiebehülse 6 in Richtung des Pfeils 7 verschoben werden, wodurch eine innerhalb der Schiebehülse 6 befindliche, nicht dargestellte Kugelrastung geöffnet wird. Danach kann der Kupplungsnippel 4 in die Kupplungshülse 5 eingeschoben werden und die Schiebehülse 6 wird entgegen der Richtung des Pfeils 7 verschoben. Dabei rastet die Kugelrastung in die hierfür am Kupplungsnippel 4 vorgesehene Umfangsnut 8 ein und hält diesen sicher in der Kupplungshülse 5 fest. Im Kupplungsnippel 4 ist schematisch (mit gestrichelten Linien) ein Ventileinsatz 9 dargestellt, der bei offener Schlauchkupplung 1 den Kupplungsnippel 4 dicht verschließt. Ein derartiger Ventileinsatz ist auch in der Kupplungshülse 5 vorgesehen, so daß auch diese bei offener Schlauchkupplung 1 dicht verschlossen ist. Beim Kuppeln der Schlauchkupplung 1 öffnen die beiden Ventileinsätze, so daß die Enden 2 und 3 der Schlauchleitungen miteinander verbunden sind und das zu transportierende Fluid die Schlauchkupplung 1 passieren kann.

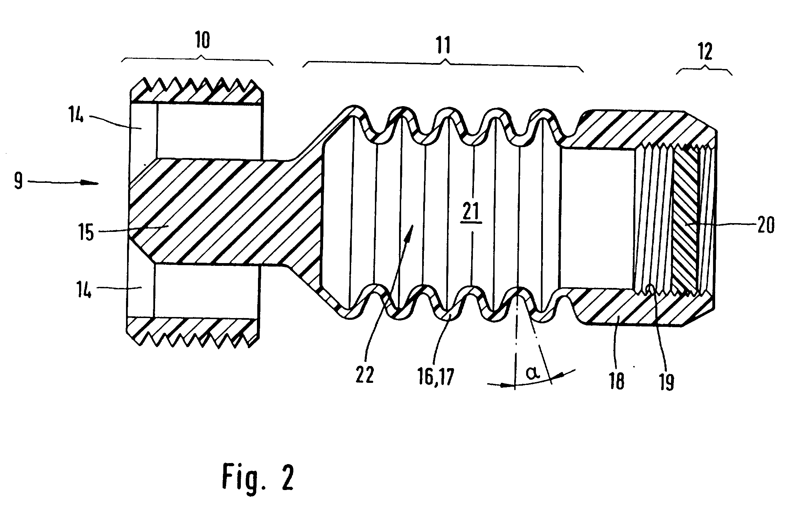

Die Figur 2 zeigt ein erstes Ausführungsbeispiel des Ventileinsatzes 9, der als einstückiges Bauteil ausgestaltet ist. Der Ventileinsatz 9 weist ein Halteelement 10, eine Ventilfeder 11 und einen Ventilsitz 12 auf. Die Befestigung des Ventileinsatzes 9 im Kupplungsnippel 4 bzw. in der Kupplungshülse 5 erfolgt über das Halteelement 10, welches im Nippel 4 bzw. in der Hülse 5 gesichert , insbesondere eingeschraubt wird. Die Einschraubrichtung ist jeweils vom Schlauchende 2 bzw. 3 in Richtung der Kupplungsöffnung. Zum Einschrauben des Ventileinsatzes 9 kann z.B. der Kupplungsnippel 4 mittels einer Überwurfmutter 13 abgenommen werden, so daß er von hinten zugängig ist. Entsprechend ist die Kupplungshülse 5 demontierbar bzw. zum Einsetzen oder Entnehmen des Ventileinsatzes 9 zerlegbar.

Am Halteelement 10 ist koaxial über zwei Stege 14 ein Federträger 15 vorgesehen, der in die Ventilfeder 11 übergeht. Diese Ventilfeder 11 ist als Balg 16 ausgebildet und besitzt eine ondulierte Wandung 17. Anstelle einer ondulation kann die Wandung 17 auch zick-zack-förmig oder rechteckförmig ausgebildet sein. Durch die Neigung, hier dargestellt durch den Winkel a, der einzelnen Wandungsabschnitte ist die Federkonstante veränderbar. Diese kann aber auch durch die Wandstärke, die Länge der Ventilfeder 11, den Krümmungsradius der Ondulation usw. variiert werden.

An die Ventilfeder 11 schließt sich ein hülsenförmiger Fortsatz 18, der den Ventilsitz 12 trägt. Dieser Ventilsitz 12 ist bei dem dargestellten Ausführungsbeispiel kegelförmig ausgestaltet, er kann jedoch auch mit einer Dichtung versehen sein. Der Fortsatz 18 weist ein Innengewinde 19 auf, in welches ein Schraubstopfen 20 gasdicht eingeschraubt ist. Anstelle der Schraubverbindung von Fortsatz 18 und Schraubstopfen 20 kann auch eine Scheibe eingeklebt, eingeschweißt oder aufgeschweißt sein. Auf diese Weise wird ein einen Hohlraum 21 aufweisender Körper 22 gebildet, der über die Ventilfeder 11 komprimierbar ist. Dabei wird das Volumen des Hohlraums 21 verringert und das darin enthaltene Gas komprimiert. Die auf diese Weise gespeicherte Energie erzeugt eine Rückstellkraft in Richtung der Federkraft der Ventilfeder 11, d.h. in Schließrichtung des Ventileinsatzes 9. Aufgrund dieser Rückstellkraft wird einer Ermüdung bzw. Erlahmung der Ventilfeder 11 entgegengewirkt, so daß diese über einen langen Zeitraum eine nahezu gleiche Federkonstante aufweist.

Falls erforderlich kann der Hohlraum 21 mit einem weiteren Federelement, z.B. einer Schraubenfeder oder dgl. angefüllt werden, wodurch die Federkennlinie des Ventileinsatzes 9 gezielt beeinflußt wird. Diese in den Hohlraum 21 eingesetzte Feder kann auch aus Metall sein, wobei jedoch Kunststoff bevorzugt wird. Der Ventileinsatz 9 selbst besteht aus Kunststoff, insbesondere einem Fluorkunststoff.

Sollte während des Betriebs der Schlauchkupplung 1 ein Defekt beim Ventileinsatz 9 auftreten, ist keine Verunreinigung des zu transportierenden Fluides durch Metallionen zu befürchten, da der Ventileinsatz 9 aus Kunststoff besteht.

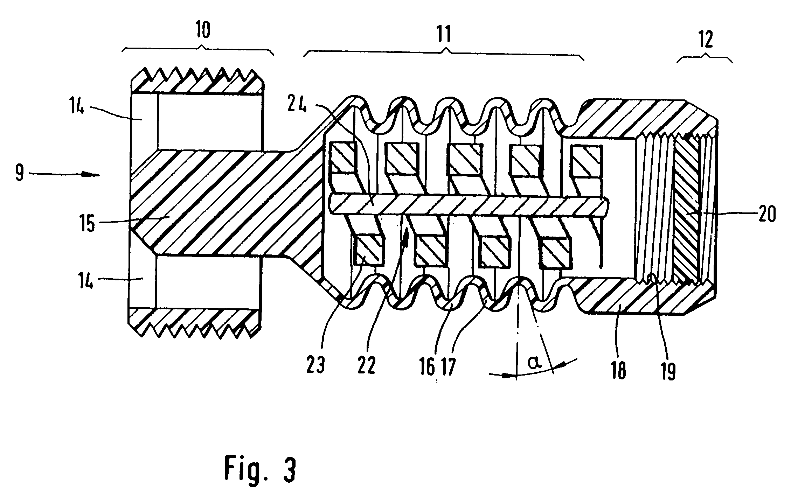

Beim Ausführungsbeispiel der Figur 3 ist in den Hohlraum 21 eine Wendelfeder als weiteres Federelement 23 eingesetzt, die eine gegenüber der Einschraubrichtung des Ventilsitzes 12 entgegengesetzte Wendelrichtung aufweist. Koaxial zur Wendelfeder 23 befindet sich im Hohlraum 21 ein Distanzstift 24, der lose in der Wendelfeder 23 liegt.

## Patentansprüche

1. Hydraulisches Absperrventil mit einem Ventileinsatz (9), der eine Ventilfeder (11), ein Halteelement (10) und einen Ventilsitz (12) aufweist, und die Ventilfeder (11), das Halteelement (10) und der Ventilsitz (12) als zweiteiliges oder einteiliges Bauteil ausgebildet sind, wobei die Ventilfeder (11) als ein einen Hohlraum (21) aufweisender Körper (22) ausgebildet ist, dadurch gekennzeichnet, daß der Hohlraum (21) mittels eines Schraubstopfens (20) oder mittels eines auf- oder einschweißbaren Deckels gasdicht verschlossen ist.

2. Hydraulisches Absperrventil nach Anspruch 1, dadurch gekennzeichnet, daß in den Hohlraum (21) ein weiteres Federelement (23) eingesetzt ist.

3. Hydraulisches Absperrventil nach Anspruch 2, dadurch gekennzeichnet, daß das weitere Federelement (23) eine Wendelfeder ist, deren Wendelrichtung insbesondere entgegen der Einschraubrichtung des Ventilsitzes (12) ist.

4. Hydraulisches Absperrventil nach einem der vorhergehenden Ansprüche, dadurch gekennzeichnet, daß die Ventilfeder (11) von einem Balg (16) gebildet wird.

5. Hydraulisches Absperrventil nach Anspruch 4, dadurch gekennzeichnet, daß der Balg (16) eine ondulierte oder eine zick-zack-förmige Wandung (17) aufweist.

6. Hydraulisches Absperrventil nach einem der vorhergehenden Ansprüche, dadurch gekennzeichnet , daß die Ventilfeder (11) eine gewendelte Feder umfaßt.

7. Hydraulisches Absperrventil nach einem der vorhergehenden Ansprüche, dadurch gekennzeichnet, daß der Ventileinsatz (9) spanend oder durch Spritzgießen hergestellt ist.

8. Hydraulisches Absperrventil nach einem der vorhergehenden Ansprüche, dadurch gekennzeichnet, daß der Ventilsitz (12) an seiner, der Ventilfeder (11) abgewandten Seite eine Betätigungsnase für einen anderen Ventileinsatz aufweist.

9. Hydraulisches Absperrventil nach einem der vorhergehenden Ansprüche, dadurch gekennzeichnet, daß der Ventileinsatz (9) aus Kunststoff, einem Fluorkunststoff, aus PFA, PTFE, TFM oder PEEK besteht.

10. Hydraulisches Absperrventil nach einem der vorhergehenden Ansprüche, dadurch gekennzeichnet, daß die Federkennlinie des Federelements (11) linear, degressiv oder progressiv ist und/oder einen Knick aufweist.

11. Hydraulisches Absperrventil nach einem der vorhergehenden Ansprüche, dadurch gekennzeichnet, daß in den Hohlraum (21) ein Distanzstift (24) eingesetzt ist.

12. Hydraulisches Absperrventil Anspruch 11, dadurch gekennzeichnet, daß der Distanzstift (24) lose oder fest mit dem Ventileinsatz (9) verbunden ist.

13. Verwendung des Ventileinsatzes eines hydraulischen Absperrventils nach einem der vorhergehenden Ansprüche in einer Kupplungshülse (5) und einem Kupplungsnippel (4) einer Schlauchkupplung (1).

14. Verwendung des Ventileinsatzes eines hydraulischen Absperrventils nach einem der vorhergehenden Ansprüche als Teil eines Überdruckventils oder Rückschlagventils.

15. Verwendung des Ventileinsatzes eines hydraulischen Absperrventils nach einem der vorhergehenden Ansprüche, in Reinstchemikalien führenden Schlauchleitungen.

## Claims

1. Hydraulic shut-off valve with a valve insert (9) which has a valve spring (11), a holding element (10) and a valve seat (12), and the valve spring (11), the holding element (10) and the valve seat (12) are designed as a two-piece or one-piece component, the valve spring (11) being designed as a body (22) which has a cavity (21), characterized in that the cavity (21) is closed in gastight fashion by means of a screw plug (20) or by means of a cover which can be welded on or welded in.

2. Hydraulic shut-off valve according to Claim 1, characterized in that a further spring element (23) is inserted into the cavity (21).

3. Hydraulic shut-off valve according to Claim 2, characterized in that the further spring element (23) is a coil spring, the coiling direction of which is, in particular, opposite to the direction of screwing in of the valve seat (12).

4. Hydraulic shut-off valve according to one of the preceding claims, characterized in that the valve spring (11) is formed by a bellows (16).

5. Hydraulic shut-off valve according to Claim 4, characterized in that the bellows (16) has an undulating or zig-zag wall (17).

6. Hydraulic shut-off valve according to one of the preceding claims, characterized in that the valve spring (11) comprises a coiled spring.

7. Hydraulic shut-off valve according to one of the preceding claims, characterized in that the valve insert (9) is produced by machining or by injection-moulding.

8. Hydraulic shut-off valve according to one of the preceding claims, characterized in that the valve seat (12) has an actuating nose for another valve insert on its side remote from the valve spring (11).

9. Hydraulic shut-off valve according to one of the preceding claims, characterized in that the valve insert (9) is composed of plastic, a fluoroplastic, PFA, PTFE, TFM or PEEK.

10. Hydraulic shut-off valve according to one of the preceding claims, characterized in that the spring characteristic of the spring element (11) is linear, degressive or progressive and/or has a kink.

11. Hydraulic shut-off valve according to one of the preceding claims, characterized in that a distance pin (24) is inserted into the cavity (21).

12. Hydraulic shut-off valve according to Claim 11, characterized in that the distance pin (24) is connected loosely or in a fixed manner to the valve insert (9).

13. Use of the valve insert of a hydraulic shut-off valve according to one of the preceding claims in a coupling sleeve (5) and a coupling nipple (4) of a hose coupling (1).

14. Use of the valve insert of a hydraulic shut-off valve according to one of the preceding claims as part of a pressure relief valve or non-return valve.

15. Use of the valve insert of a hydraulic shut-off valve according to one of the preceding claims in hose lines carrying high-purity chemicals.

## Revendications

1. Soupape hydraulique d'arrêt comprenant une pièce rapportée interne de soupape (9) qui comporte un ressort de soupape (11), un élément de retenue (10) et un siège de soupape (12) et le ressort de soupape (11), l'élément de retenue (10) et le siège de soupape (12) sont conformés en composant deux pièces ou une pièce, le ressort de soupape (11) étant conformé en un corps (22) comportant une cavité (21), caractérisé en ce que la cavité (21) est obturée hermétiquement au moyen d'un bouchon se vissant (20) ou au moyen d'un couvercle pouvant être soudé extérieurement ou intérieurement.

2. Soupape hydraulique d'arrêt selon la revendication 1, caractérisée en ce qu'un autre élément de ressort (23) est installé dans la cavité (21).

3. Soupape hydraulique d'arrêt selon la revendication 2, caractérisée en ce que l'autre élément de ressort (23) est un ressort à boudin dont le sens d'enroulement est en particulier l'inverse du sens du taraudage du siège de soupape (12).

4. Soupape hydraulique d'arrêt selon l'une des revendications précédentes, caractérisée en ce que le ressort de soupape (11) est formé d'un soufflet (16).

5. Soupape hydraulique d'arrêt selon la revendication 4, caractérisée en ce que le soufflet (16) présente une paroi (17) qui est ondulée ou de forme en zigzag.

6. Soupape hydraulique d'arrêt selon l'une des revendications précédentes, caractérisée en ce que le ressort de soupape (11) comprend un ressort hélicoïdal.

7. Soupape hydraulique d'arrêt selon l'une des revendications précédentes, caractérisée en ce que la pièce rapportée interne de soupape (9) est fabriquée par enlèvement ou par moulage par injection.

8. Soupape hydraulique d'arrêt selon l'une des revendications précédentes, caractérisée en ce que le siège de soupape (12) comporte, sur le côté tourné à l'opposé du ressort de soupape (11), un talon d'actionnement d'une autre pièce rapportée interne de soupape.

9. Soupape hydraulique d'arrêt selon l'une des revendications précédentes, caractérisée en ce que la pièce rapportée interne de soupape (9) est en matière plastique, une matière plastique fluorée, en PFA, PTFE, TFM ou PEEK.

10. Soupape hydraulique d'arrêt selon l'une des revendications précédentes, caractérisée en ce que la courbe caractéristique d'élasticité de l'élément de ressort (11) est linéaire, décroissante ou croissante et/ou comporte un coude.

11. Soupape hydraulique d'arrêt selon l'une des revendications précédentes, caractérisée en ce qu'une tige d'entretoisement (24) est logée dans la cavité (21).

12. Soupape hydraulique d'arrêt selon la revendication 11, caractérisée en ce que la tige d'entretoisement (24) est reliée librement ou fixement à la pièce rapportée interne de soupape (9).

13. Utilisation de la pièce rapportée interne de soupape d'une soupape hydraulique d'arrêt selon l'une des revendications précédentes à l'intérieur d'un manchon de raccord (5) et d'une douille de raccord (4) d'un raccord (1) de flexibles.

14. Utilisation de la pièce rapportée interne de soupape d'une soupape hydraulique d'arrêt selon l'une des revendications précédentes en élément d'une soupape de sécurité ou d'une soupape de retenue.

15. Utilisation de la pièce rapportée interne de soupape d'une soupape hydraulique d'arrêt selon l'une des revendications précédentes dans des conduits flexibles par lesquels passent des produits chimiques extrêmement purs.
